# EUROPEAN PATENT APPLICATION

(11) **EP 4 714 524 A2**
(43) Date of publication of application: **25.03.2026**
(21) Application number: 25182404.1
(22) Date of filing: 12.06.2025
(51) Int. Cl.: B01D 51/10, B01D 53/00, B01D 53/24, B01D 53/26, F25J 3/06

(54) **CARBON DIOXIDE SEPARATION AND CAPTURE SYSTEM**

(30) Priority: 13.06.2024 KR 20240076841
(71) Applicant: Institute for Advanced Engineering, Yongin-si, Gyeonggi-do 17180 (KR)
(72) Inventor: CHUNG, Sohmyung, 17161 Yongin-si, Gyeonggi-do (KR); PARK, Junseok, 17047 Yongin-si, Gyeonggi-do (KR); LEE, Changhyeong, 46055 Busan (KR); CHOI, Kwangsoon, 07226 Seoul (KR); LIM, Jongwoong, 17053 Yongin-si, Gyeonggi-do (KR); PARK, Sungho, 17149 Yongin-si, Gyeonggi-do (KR)
(74) Representative: BCKIP Part mbB

(57) **Abstract**

The present invention relates to a carbon dioxide separation and capture system. A carbon dioxide separation and capture system according to an embodiment of the present invention may include a first compression unit supplied with exhaust gas and compressing the exhaust gas to generate first compressed gas, a heat exchange unit connected to the first compression unit, supplied with the first compressed gas, and cooling the first compressed gas, a second compression unit connected to the heat exchange unit and compressing the first compressed gas cooled in the heat exchange unit to generate second compressed gas; and a separation and capture unit connected to the second compression unit and separating and capturing solid carbon dioxide from the second compressed gas by converting internal energy of the second compressed gas into kinetic energy and cooling the second compressed gas.

## Description

### [Technical Field]

The present invention relates to a carbon dioxide separation and capture system.

### [Background Art]

As global warming is accelerated, problems such as abnormal climate and rising sea levels are occurring worldwide. The main cause of this worsening global warming is the increase in greenhouse gas emissions. Since carbon dioxide emissions account for the largest proportion of greenhouse gas emissions, a need to reduce carbon dioxide emissions is gradually increasing.

However, since the current industrial energy use efficiency is at its maximum level, there is a concern that excessive carbon dioxide emission reductions may lead to weakening industrial competitiveness. Therefore, in addition to efforts to reduce the carbon dioxide emissions, direct reduction through carbon dioxide capture, utilization, and storage technology (CCUS) is required as a technological alternative.

The CCUS includes technologies for capturing carbon dioxide generated from industrial facilities, storing the captured carbon dioxide underground, and converting the carbon dioxide into useful resource materials with high added value.

Among these, the carbon dioxide capture technology is mainly divided into post-combustion technology, pre-combustion technology, and oxy-fuel combustion technology.

Specifically, the post-combustion technology is a method of separating the carbon dioxide from exhaust gases emitted when combusting fossil fuels with air. The pre-combustion technology is a method of separating the carbon dioxide from fossil fuels in the process of producing hydrogen, converting the synthesis gas generated after gasifying fossil fuels into the carbon dioxide and hydrogen through the water-gas transfer reaction, and then separating only the carbon dioxide. The oxy-fuel combustion technology is a method of generating and separating only the carbon dioxide after combustion by separating oxygen from the air instead of air and combusting fossil fuels.

Among these, the post-combustion technology is divided into a wet absorption method utilizing amine-based wet absorbent, a dry absorption method utilizing solid adsorbent, a membrane separation method utilizing a separating membrane, and a phase separation method utilizing phase change.

However, in the case of the wet absorption method, there is a problem that after separating the carbon dioxide from the wet absorbent, a large amount of compression work is required to liquefy the carbon dioxide separated from the wet absorbent, and high energy is required to regenerate the wet absorbent to its initial state. The dry absorption method also has a problem in that a large amount of the compression work is required to liquefy the carbon dioxide separated from the solid adsorbent after separating the solid adsorbent from the carbon dioxide, and high energy is required to regenerate the solid adsorbent to its initial state. In addition, in the case of the membrane separation method, there is a problem that it is difficult to increase the capacity and durability is weak due to deterioration of the separating membrane. In addition, in the case of the phase separation method, there is a disadvantage of low energy efficiency because a pressure higher than the triple point is required to separate the carbon dioxide from the exhaust gas to the liquid phase.

Therefore, there is a need to improve the process for separating and capturing carbon dioxide from the exhaust gas.

### [Disclosure]

### [Technical Problem]

Embodiments of the present invention have been devised to solve the above-described conventional problems, and are directed to providing of a carbon dioxide separation and capture system having improved energy efficiency by significantly reducing compression work consumed in a process of separating and recovering carbon dioxide from exhaust gas compared to the compression work of a conventional wet absorption method, dry absorption method, and phase separation method, thereby saving energy.

In addition, since the compression work is relatively small compared to the conventional wet absorption method, dry absorption method, and phase separation method, energy consumption for the compression work is less than that of the conventional wet absorption method, dry absorption method, and phase separation method, so that the embodiments of the present invention are directed to providing of a carbon dioxide separation and capture system that may be easily applied to large plants that emit a large amount of carbon dioxide.

In addition, the embodiments of the present invention are directed to providing of a carbon dioxide separation and capture system that enables cost reduction by simplifying and downsizing equipment compared to the conventional wet absorption method, dry absorption method, and membrane separation method and improves operational efficiency by increasing space utilization of mobility that utilizes limited space.

In addition, the embodiments of the present invention are directed to providing of a carbon dioxide separation and capture system capable of separating and capturing carbon dioxide with relatively little energy by restoring a pressure of gas from which the carbon dioxide is separated to maximize flow energy of the gas and recovering electric energy from the gas with the maximized flow energy.

In addition, the embodiments of the present invention are directed to providing of a carbon dioxide separation and capture system in which an overall system efficiency is improved as cold heat of the gas from which the carbon dioxide is separated may be recovered and reused for cooling of compressed gas.

### [Technical Solution]

According to an aspect of the present invention, it is possible to provide a carbon dioxide separation and capture system including: a first compression unit supplied with exhaust gas and compressing the exhaust gas to generate first compressed gas; a heat exchange unit connected to the first compression unit, supplied with the first compressed gas, and cooling the first compressed gas; a second compression unit connected to the heat exchange unit and compressing the first compressed gas cooled in the heat exchange unit to generate second compressed gas; and a separation and capture unit connected to the second compression unit and separating and capturing solid carbon dioxide from the second compressed gas by converting internal energy of the second compressed gas into kinetic energy and cooling the second compressed gas.

In addition, the separation and capture unit may include a centrifugal dust collection unit that converts flow of the second compressed gas into supersonic flow to cool the second compressed gas, thereby inducing a phase change of gaseous carbon dioxide included in the second compressed gas into a solid state and separating therefrom.

In addition, the centrifugal dust collection unit may include: a main body; and a vortex finder connected to the main body such that at least a part of the vortex finder is disposed inside the main body and providing a path through which the second compressed gas is discharged, wherein the second compressed gas may rotate and flow along a flow path formed between an outer wall of the vortex finder disposed inside the main body and an inner wall of the main body.

In addition, the centrifugal dust collection unit may further include a nozzle of which at least a part is disposed on the flow path and connected diagonally to an end of a supply line connected to the main body, wherein the nozzle injects the second compressed gas diagonally, and the second compressed gas injected diagonally through the nozzle may rotate and flow along the flow path.

In addition, the centrifugal dust collection unit may include: a main body; a vortex finder connected to the main body such that at least a part of the vortex finder is disposed inside the main body and providing a path through which the remaining exhaust gas is discharged; and a flow guide member disposed inside the main body, wherein the second compressed gas may rotate and flow along a flow path formed between an outer wall of the flow guide member disposed inside the main body and an inner wall of the main body.

In addition, the flow path is equipped with a swirler, wherein the swirler may induce the second compressed gas to rotate along the flow path while having a turning angle in the flow path.

In addition, the system may further include a power generation unit connected to the separation and capture unit and supplied with a remaining exhaust gas after the solid carbon dioxide is separated from the second compressed gas, and converting flow energy of the remaining exhaust gas into electric energy.

In addition, the second compression unit may include a second compressor that is axially connected to an impeller module of the power generation unit.

In addition, the separation and capture unit may include: a nozzle part supplied with the second compressed gas from the second compression unit and converting flow of the second compressed gas into supersonic flow; a plurality of centrifugal dust collection units connected to the nozzle part; and an integrated module accommodating the plurality of centrifugal dust collection units.

In addition, the separation and capture unit may further include: a nozzle part supplied with at least a part of the second compressed gas from the second compression unit and converting flow of the second compressed gas into supersonic flow; a plurality of filtration dust collection parts connected to the nozzle part; and an integrated module accommodating the plurality of filtration dust collection parts and supplied with a remainder of the second compressed gas discharged from the second compression unit.

In addition, the system may further include an expansion unit connected to the separation and capture unit, supplied with a remaining exhaust gas after the solid carbon dioxide is separated from the second compressed gas, and converting flow energy of the remaining exhaust gas into expansion energy.

In addition, the expansion unit includes an expander that expands and cools the remaining exhaust gas, and the remaining exhaust gas expanded from the expander may be supplied to the heat exchange unit.

In addition, the second compression unit may include a second compressor that is axially connected to the expander.

### [Advantageous Effects]

According to the embodiments of the present invention, it is possible to have improved energy efficiency by significantly reducing a compression work consumed in a process of separating and recovering carbon dioxide from exhaust gas compared to a compression work of a conventional wet absorption method, dry absorption method, and phase separation method, thereby saving energy.

In addition, since the compression work is relatively small compared to the conventional wet absorption method, dry absorption method, and membrane separation method, energy consumption for the compression work is less than that of the conventional wet absorption method, dry absorption method, and membrane separation method, so that it is possible to easily apply to large plants that emit a large amount of carbon dioxide.

In addition, it is possible to enable cost reduction by simplifying and downsizing equipment compared to the conventional wet absorption method, dry absorption method, and membrane separation method, and it is possible to improve operational efficiency by increasing space utilization of mobility that utilizes limited space.

In addition, it is possible to separate and capture the carbon dioxide with relatively little energy by restoring a pressure of gas from which the carbon dioxide is separated to maximize flow energy of the gas, and recovering electric energy from the gas with the maximized flow energy.

In addition, it is possible to improve an overall system efficiency as cold heat of the gas from which the carbon dioxide is separated can be recovered and reused for cooling of compressed gas.

### [Description of Drawings]

FIG. 1 is a process diagram of a carbon dioxide separation and capture system according to an embodiment of the present invention.
FIG. 2 is a view of a separation and capture unit of the carbon dioxide separation and capture system in FIG. 1.
FIG. 3 is a process diagram of a carbon dioxide separation and capture system according to another embodiment of the present invention.
FIG. 4 is a view of a separation and capture unit of the carbon dioxide separation and capture system in FIG. 3.
FIG. 5 is a process diagram of a carbon dioxide separation and capture system according to still another embodiment of the present invention.
FIG. 6 is a view of a separation and capture unit of the carbon dioxide separation and capture system in FIG. 5.
FIG. 7 is a process diagram of a carbon dioxide separation and capture system according to still another embodiment of the present invention.
FIG. 8 is a view of a separation and capture unit of the carbon dioxide separation and capture system in FIG. 7.
FIG. 9 is a process diagram of a carbon dioxide separation and capture system according to yet another embodiment of the present invention.
FIG. 10 is a view of a separation and capture unit of the carbon dioxide separation and capture system in FIG. 9.

### [Modes of the Invention]

Hereinafter, specific embodiments for implementing the idea of the present invention will be described in detail with reference to the drawings.

In addition, when describing the present invention, when it is determined that a detailed description of a related known configuration or function may obscure the gist of the present invention, the detailed description thereof will be omitted.

Additionally, it will be understood that when a component is referred to as being 'coupled' or 'connected' to another component, it may be directly coupled or connected to another component or other components may be present therebetween.

The terms used herein are only to describe specific embodiments and are not intended to limit the present invention. Singular expressions include plural expressions unless the context clearly indicates otherwise.

In addition, it is to be noted in advance that the expressions such as one side, the other side, upper side, lower side, etc. in this specification are described based on the diagram shown in the drawing, and may be expressed differently if the direction of the object is changed. For the same reason, some components in the attached drawings are exaggerated, omitted, or schematically illustrated, and the size of each component does not fully match the actual size thereof.

Additionally, terms that include ordinal numbers, such as first, second, etc., may be used to describe various components, but the components are not limited by such terms. These terms are only used for the purpose of distinguishing one component from the other.

The term "include" used herein is used to specify specific characteristics, regions, integers, steps, operations, components and/or compositions, and does not exclude any of presence or addition of other specific characteristics, regions, integers, steps, operations, components, composition and/or groups.

Hereinafter, a specific configuration of a carbon dioxide separation and capture system according to an embodiment of the present invention will be described with reference to the drawings.

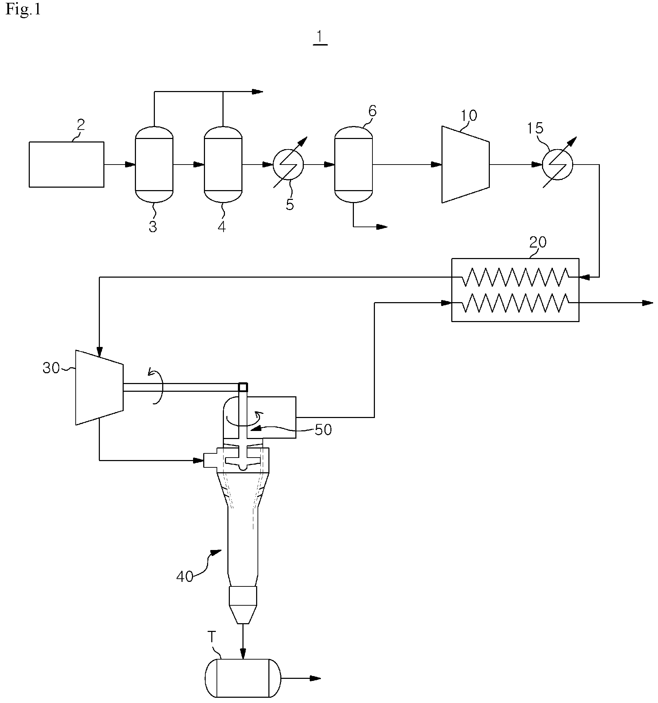

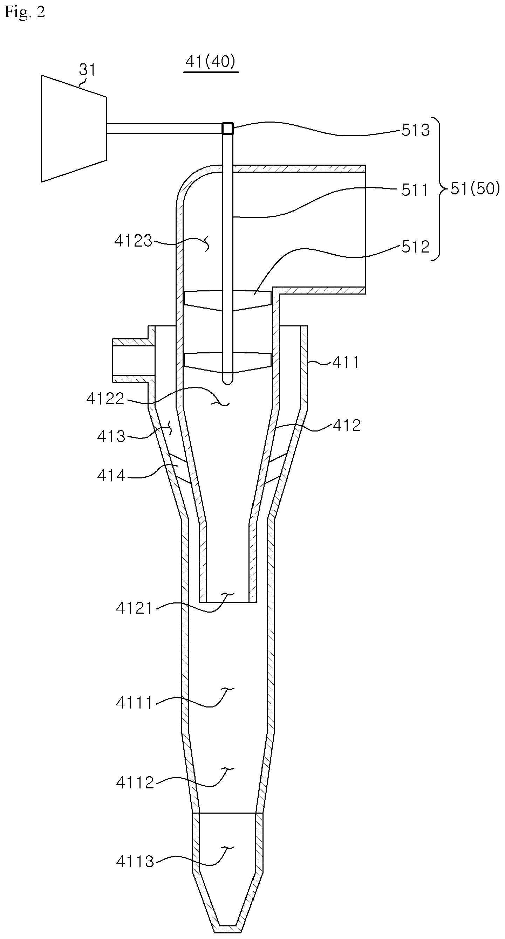

Referring to FIGS. 1 and 2, a carbon dioxide separation and capture system 1 according to an embodiment of the present invention may include a first compression unit 10, a heat exchange unit 20, a second compression unit 30, a separation and capture unit 40, and a power generation unit 50.

The first compression unit 10 may compress exhaust gas supplied from an exhaust gas discharge source 2. For example, the exhaust gas may be flue gas composed of nitrogen, oxygen, carbon dioxide, and water vapor. However, this is only an example for convenience of description, and a composition of the exhaust gas may vary into various compositions containing at least the carbon dioxide.

The first compression unit 10 may pressurize gas that has undergone pretreatment to separate and remove a combustion product included in the exhaust gas to a pressure of about 3.5 bara to about 6 bara, which is a lower pressure compared to the related art. For example, the exhaust gas may be sequentially pre-treated through a desulfurization device 3, a catalytic converter 4, an exhaust gas cooler 5, and a moisture condenser 6, and then supplied to the first compression unit 10.

The compressed gas in the first compression unit 10 (hereinafter referred to as 'first compressed gas') may be post-treated and then supplied to the heat exchange unit 20. Here, post-treatment means that moisture included in the first compressed gas is removed by pre-cooling through a pre-cooler 15 included in the first compressed gas.

The heat exchange unit 20 may be supplied with the first compressed gas from the first compression unit 10 and cool the same. To this end, the heat exchange unit 20 may be connected to a rear end of the first compression unit 10 and serve to cool the first compressed gas discharged from the first compression unit 10. In other words, the heat exchange unit 20 may lower a temperature of the first compressed gas by removing sensible heat of the first compressed gas discharged from the first compression unit 10.

In this case, cold heat for cooling the first compressed gas may be cold heat of gas discharged from the separation and capture unit 40. Here, the gas discharged from the separation and capture unit 40 may be remaining exhaust gas after solid carbon dioxide is separated from the first compressed gas (hereinafter referred to as 'cooled compressed gas') cooled in the heat exchange unit 20, for example, gaseous nitrogen/oxygen.

Meanwhile, in consideration of a concentration of the carbon dioxide present in the first compressed gas, an expansion ratio of the separation and capture unit 40 or a nozzle part 42 and a capture efficiency of the carbon dioxide, cold heat provided from outside may be additionally supplied as the cold heat for cooling the first compressed gas. For example, the cold heat provided from outside may be cold heat from liquefied natural gas, cold heat from liquid nitrogen, or cold heat supplied through a freezer.

The heat exchange unit 20 may cool the first compressed gas by heat-exchanging the remaining exhaust gas discharged from the separation and capture unit 40 with the first compressed gas discharged from the first compression unit 10. The cooled compressed gas cooled in this way may be supplied to the second compression unit 30.

The second compression unit 30 may generate second compressed gas by compressing the first compressed gas cooled in the heat exchange unit 20, for example, the cooled compressed gas. To this end, the second compression unit 30 may be connected to the heat exchange unit 20 and may include a second compressor 31 that is axially connected to an impeller module 51 of the power generation unit 50 described later. This will be described later.

Meanwhile, since the first compressed gas is compressed to a predetermined pressure through the second compressor 31, the second compressed gas generated in this way may flow supersonically in a centrifugal dust collection unit 41 of the separation and capture unit 40 described later. This will be described later.

The separation and capture unit 40 may separate and capture the solid carbon dioxide from the second compressed gas by converting internal energy of the second compressed gas into kinetic energy and cooling the second compressed gas.

To this end, the separation and capture unit 40 may include the centrifugal dust collection unit 41 that converts flow of the second compressed gas into supersonic flow and cools the second compressed gas, thereby inducing a phase change of gaseous carbon dioxide included in the second compressed gas into a solid state and separating therefrom.

The centrifugal dust collection unit 41 may be supplied with the second compressed gas from the second compression unit 30 and isentropically expand the same to separate and capture the solid carbon dioxide from the second compressed gas. In other words, the centrifugal dust collection unit 41 may rapidly cool the second compressed gas to freeze the carbon dioxide included in the second compressed gas, and the frozen carbon dioxide may be separated from the exhaust gas using centrifugation.

Specifically, the centrifugal dust collection unit 41 may perform an isentropic expansion flow transformation of the second compressed gas and separation and capture of the carbon dioxide simultaneously. Accordingly, in a process of the second compressed gas passing through the centrifugal dust collection unit 41, the second compressed gas expands below a sublimation point and causes a phase change phenomenon of the gaseous carbon dioxide included in the second compressed gas into the solid-state carbon dioxide, and other gases of the second compressed gas, for example, nitrogen/oxygen, may expand in a gaseous state.

To this end, the centrifugal dust collection unit 41 may include a main body 411 and a vortex finder 412 connected to the main body 411 such that at least a part thereof is disposed inside the main body 411 and providing a path through which the second compressed gas is discharged.

A flow path 413 may be formed between an outer wall of the vortex finder 412 disposed inside the main body 411 and an inner wall of the main body 411. The flow path 413 may also be referred to as a supersonic flow path that converts the flow of the second compressed gas supplied from the second compression unit 30 into the supersonic flow.

In this case, the flow path 413 may be equipped with a swirler 414. Through the swirler 414, the second compressed gas may rotate and flow along the flow path 413 while having a turning angle of about 15 degrees to about 65 degrees. The swirler 414 positioned in a middle of the flow path 413 may be installed before the flow is converted into the supersonic flow or may be positioned after the flow is converted into the supersonic flow. The swirler 414 may form the second compressed gas isentropically expanded in the flow path 413 into supersonic swirling flow. In addition, the swirler 414 may form the second compressed gas into subsonic swirling flow before the isentropic expansion in the flow path 413.

Meanwhile, the solid carbon dioxide and the gaseous nitrogen/oxygen discharged through the supersonic swirling flow may swirl-flow along a middle flow path 4111 of the main body 411. In addition, as an example, the solid carbon dioxide may be separated from the gaseous nitrogen/oxygen in a rear-end flow path 4112 that is provided in a cone shape in which a cross-sectional area of the flow path decreases as it goes downward in the main body 411. In other words, in a process of the gaseous nitrogen/oxygen and solid carbon dioxide being discharged through the supersonic swirling flow, the gaseous carbon dioxide inside the compressed gas expands and phase-changes into the solid carbon dioxide, and in the process of being discharged through the supersonic swirling flow, the solid carbon dioxide may be separated from the gaseous nitrogen/oxygen due to centrifugal force and gravity of particles. The separated solid carbon dioxide may be captured in a capturing part 4113 disposed at a lower portion of the main body 411 due to an influence of the gravity. In addition, the solid carbon dioxide captured in the capturing part 4113 may be transferred and stored at a separate tank T.

In this case, the gaseous nitrogen/oxygen (hereinafter referred to as 'remaining exhaust gas') separated from the solid carbon dioxide may be converted into a countercurrent due to the shape of the rear-end flow path 4112 and move upward. For example, as the remaining exhaust gas still has the swirling flow, a speed of the remaining exhaust gas may be accelerated at the lower portion of the main body 411. Accordingly, a flow direction of the remaining exhaust gas is changed to an opposite direction of an isentropic flow direction through collision flow, so that the remaining exhaust gas may be discharged through the vortex finder 412 connected to an upper portion of the main body 411.

Meanwhile, the remaining exhaust gas flowing in the opposite direction of the isentropic flow direction may be discharged after sequentially passing through an inlet flow path 4121 and a middle flow path 4122 of the vortex finder 412, and then passing through the power generation unit 50 provided in a discharge flow path 3123. As such, the flow energy of the remaining exhaust gas discharged through the vortex finder 412, that is, kinetic energy and rotational energy, may be converted into electric energy while passing through the power generation unit 50 installed at a rear end of the vortex finder 412.

The middle flow path 4122 of the vortex finder 412 may be formed integrally with the inlet flow path 4121 and may have a shape in which a flow cross-sectional area increases as it approaches the power generation unit 50. In other words, the inlet flow path 4121 and the middle flow path 4122 of the vortex finder 412 may serve as a diffuser capable of restoring at least a part of a pressure of the remaining exhaust gas. Accordingly, hereinafter, for convenience of description, the inlet flow path 4121 and the middle flow path 4122 of the vortex finder 412 will be referred to as a diffuser flow path.

Accordingly, the pressure of the remaining exhaust gas may be restored and supplied to the power generation unit 50 by the inlet flow path 4121 and the middle flow path 4122 that are the diffuser flow paths of the vortex finder 412. As such, when the pressure of the remaining exhaust gas is restored before being supplied to the power generation unit 50, the flow energy of the remaining exhaust gas may be maximized. As such, when the flow energy of the remaining exhaust gas is maximized, energy recovery in the power generation unit 50 may be maximized. This will be described later.

The power generation unit 50 may be connected to the separation and capture unit 40 and be supplied with the remaining exhaust gas after the solid carbon dioxide is separated from the second compressed gas, and may convert the flow energy of the remaining exhaust gas into electric energy. Here, the remaining exhaust gas supplied to the power generation unit 50 may be in a state in which the pressure is restored through the inlet flow path 4121 and the middle flow path 4122 that are the diffuser flow paths of the vortex finder 412, in other words, the remaining exhaust gas indicates the exhaust gas in a state in which the flow energy is maximized.

To this end, the power generation unit 50 may include the impeller module 51. The impeller module 51 may include a shaft part 511, a wing part 512 connected to the shaft part 511, and a connecting part 513 that axially connects the shaft part 511 and the second compressor 31 of the second compression unit 30.

At least a part of the shaft part 511 and the wing part 512 may be disposed inside the vortex finder 412, and the connecting part 513 may be disposed outside the vortex finder 412 to axially connect the shaft part 511 and a shaft part 311 of the second compressor 31. Although not shown, the connecting part 513 may be equipped as a bevel gear.

Meanwhile, since the remaining exhaust gas supplied to the power generation unit 50 is in a state in which the flow energy is maximized by the inlet flow path 4121 and the middle flow path 4122 that are the diffuser flow paths of the vortex finder 412, the power generation unit 50 may recover the electric energy from the flow energy more effectively. In addition, the remaining exhaust gas passed through the power generation unit 50 may be supplied to the heat exchange unit 20. As such, cold heat of the remaining exhaust gas separated through the separation and capture unit 40 may be recovered and reused for cooling the first compressed gas.

The carbon dioxide separation and capture system 1 having the above-described configuration has an effect of improving energy efficiency by significantly reducing a compression work consumed in a process of separating and recovering carbon dioxide from exhaust gas compared to a compression work of a conventional wet absorption method, dry absorption method, and membrane separation method, thereby saving energy.

In addition, since the compression work is relatively small compared to the conventional wet absorption method, dry absorption method, and membrane separation method, energy consumption for the compression work is less than that of the conventional wet absorption method, dry absorption method, and membrane separation method, so that it is possible to easily apply to large plants that emit a large amount of the carbon dioxide.

In addition, it is possible to enable cost reduction by simplifying and downsizing equipment compared to the conventional wet absorption method, dry absorption method, and membrane separation method, and it is possible to improve operational efficiency by increasing space utilization of mobility that utilizes limited space.

In addition, it is possible to separate and capture the carbon dioxide with relatively little energy by restoring a pressure of gas from which the carbon dioxide is separated to maximize flow energy of the gas, and recovering electric energy from the gas with the maximized flow energy.

In addition, it is possible to improve an overall system efficiency as cold heat of the gas from which the carbon dioxide is separated may be recovered and reused for cooling of compressed gas.

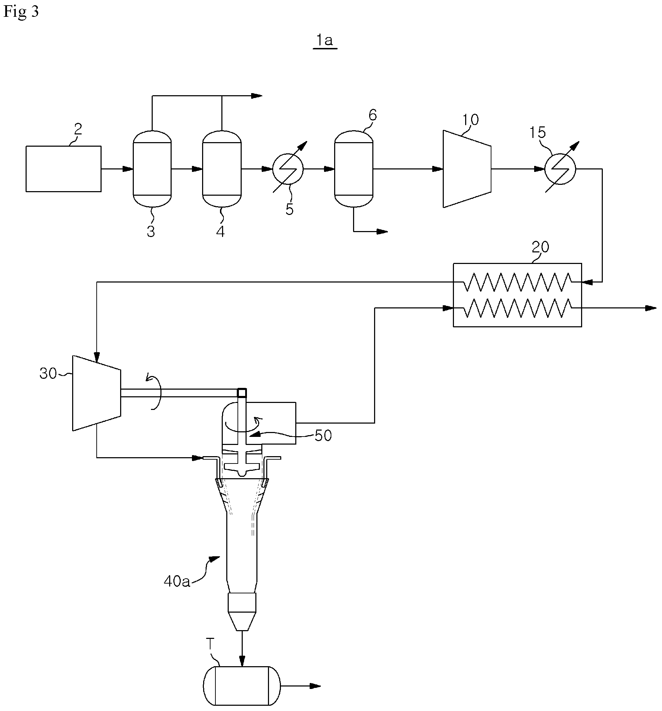

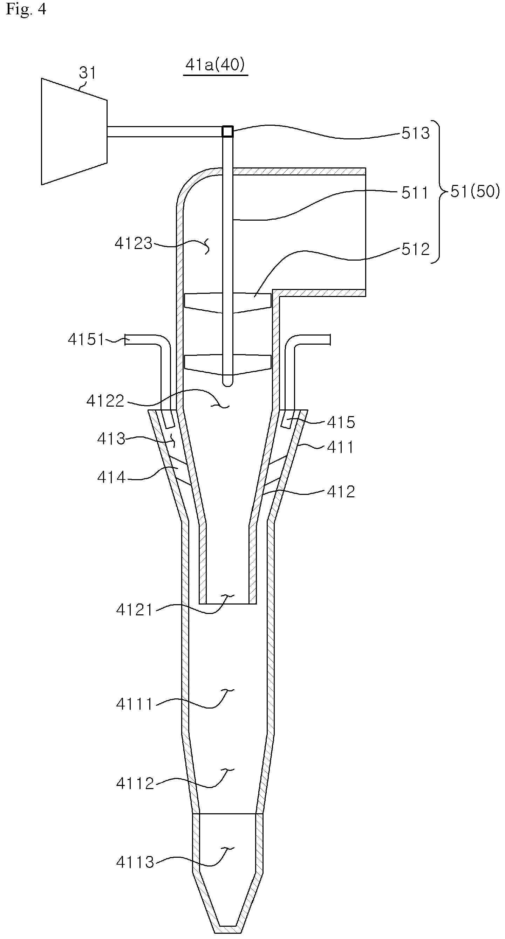

Hereinafter, a carbon dioxide separation and capture system 1a according to another embodiment of the present invention will be described with reference to FIGS. 3 and 4.

Referring to FIGS. 3 and 4, a carbon dioxide separation and capture system 1a according to another embodiment of the present invention may include a first compression unit 10, a heat exchange unit 20, a second compression unit 30, a separation and capture unit 40a, and a power generation unit 50. However, since the carbon dioxide separation and capture system 1a shown in FIGS. 3 and 4 is substantially the same as the carbon dioxide separation and capture system 1 described with reference to FIGS. 1 and 2 except for the separation and capture unit 40a, the separation and capture unit 40a corresponding to a difference will be described below.

The separation and capture unit 40a may include a centrifugal dust collection unit 41a that converts flow of second compressed gas into supersonic flow and cools the second compressed gas, thereby inducing a phase change of gaseous carbon dioxide included in the second compressed gas into a solid state and separating therefrom.

The centrifugal dust collection unit 41a may include a main body 411, a vortex finder 412, and a nozzle 415. However, since the main body 411 and the vortex finder 412 are substantially the same as the main body 411 and the vortex finder 412 described with reference to FIGS. 1 and 2, the nozzle 415 corresponding to a difference will be described below.

The nozzle 415 may cause the second compressed gas to expand isentropically by converting the flow of the second compressed gas into isentropic flow, thereby inducing a phase change of the gaseous carbon dioxide included in the second compressed gas into the solid state and separating therefrom.

To this end, the nozzle 415 may be connected to the main body 411. For example, the nozzle 415 may be inclinedly connected to an end of a supply line 4151 connected to the main body 411 and may be disposed on a flow path 413 formed between an outer wall of the vortex finder 412 disposed inside the main body 411 and an inner wall of the main body 411. The flow path 413 may also be referred to as a supersonic flow path that converts the flow of the second compressed gas supplied from the second compression unit 30 into the supersonic flow.

Since the nozzle 415 in the flow path 413 is disposed diagonally with respect to the end of the supply line 4151, the isentropically expanded second compressed gas may be injected diagonally. The second compressed gas diagonally injected through the nozzle 415 may be discharged while rotating. The carbon dioxide of the second compressed gas reaches a sublimation point due to the rapidly decreasing temperature at a speed of at least Mach number 1 in the second compressed gas that converted into the isentropic flow by passing through a nozzle 415. Accordingly, the solid carbon dioxide and gaseous nitrogen/oxygen may be discharged while having supersonic swirl-flow.

In this case, the flow path 413 may be equipped with a swirler 414. Through the swirler 414, the second compressed gas may rotate and flow along the flow path 413 while having a turning angle of about 15 degrees to about 65 degrees. Since the swirler 414 is equipped at a rear end of the nozzle 415 in the flow path 413, subsonic flow before the isentropic expansion may be made into swirling flow, or the isentropically expanded supersonic flow may be made into the swirling flow depending on whether the position is a converging part or an enlarged portion.

Meanwhile, the supersonic flow composed of the solid carbon dioxide and gaseous nitrogen/oxygen and discharged through the swirling flow may swirl-flow along a middle flow path 4111 of the main body 411. In addition, as an example, the solid carbon dioxide may be separated from the gaseous nitrogen/oxygen in a rear-end flow path 4112 that is provided in a cone shape in which a cross-sectional area of the flow path decreases as it goes downward in the main body 411. In other words, in a process of the gaseous nitrogen/oxygen and solid carbon dioxide being discharged through the swirling flow, the solid carbon dioxide may be separated from the gaseous nitrogen/oxygen due to centrifugal force and gravity of particles. The separated solid carbon dioxide may be captured in a capturing part 4113 disposed at a lower portion of the main body 411 due to an influence of the gravity. In addition, the solid carbon dioxide captured in the capturing part 4113 may be transferred and stored at a separate tank T.

In this case, the gaseous nitrogen/oxygen (hereinafter referred to as 'remaining exhaust gas') from which the solid carbon dioxide is separated may be converted into a countercurrent due to the shape of the rear-end flow path 4112 and move upward. For example, as the remaining exhaust gas still has the swirling flow, a speed of the remaining exhaust gas may be accelerated at the lower portion of the main body 411. Accordingly, a flow direction of the remaining exhaust gas is changed to an opposite direction of an isentropic flow direction through collision flow, so that the remaining exhaust gas may be discharged through the vortex finder 412 connected to an upper portion of the main body 411.

Meanwhile, the remaining exhaust gas flowing in the opposite direction of the isentropic flow direction may be discharged after sequentially passing through an inlet flow path 4121 and a middle flow path 4122 of the vortex finder 412, and then passing through the power generation unit 50 provided in a discharge flow path 4123. As such, flow energy of the remaining exhaust gas discharged through the vortex finder 412, that is, kinetic energy and rotational energy, may be converted into electric energy while passing through the power generation unit 50 installed at a rear end of the vortex finder 412.

The middle flow path 4122 of the vortex finder 412 may be formed integrally with the inlet flow path 4121 and may have a shape in which a flow cross-sectional area increases as it approaches the power generation unit 50. In other words, the inlet flow path 4121 and the middle flow path 4122 of the vortex finder 412 may serve as a diffuser capable of restoring at least a part of a pressure of the remaining exhaust gas. Accordingly, hereinafter, for convenience of description, the inlet flow path 4121 and the middle flow path 4122 of the vortex finder 412 will be referred to as a diffuser flow path.

Accordingly, the pressure of the remaining exhaust gas may be restored and supplied to the power generation unit 50 by the inlet flow path 4121 and the middle flow path 4122 that are the diffuser flow paths of the vortex finder 412. As such, when the pressure of the remaining exhaust gas is restored before being supplied to the power generation unit 50, the flow energy of the remaining exhaust gas may be maximized. As such, when the flow energy of the remaining exhaust gas is maximized, energy recovery in the power generation unit 50 may be maximized.

In this case, the remaining exhaust gas that passed through the power generation unit 50 may be supplied to the heat exchange unit 20. Cold heat of the remaining exhaust gas supplied to the heat exchange unit 20 may be transferred to first compressed gas.

The nozzle 415 may be supplied with the second compressed gas from the second compression unit 30 and discharge the same, but may induce the second compressed gas to be discharged at a speed increased than a speed at which the second compressed gas flows. Expansion of the second compressed gas occurs inside the nozzle 415, and in an expansion process of the second compressed gas, the gaseous carbon dioxide included in the second compressed gas may be phase-changed into the solid state. In summary, in a process of the second compressed gas passing through the nozzle 415, the carbon dioxide included in the second compressed gas is separated into the solid state, and other gases in the second compressed gas such as nitrogen/oxygen are expanded into the gaseous state. As such, when the second compressed gas expands, internal energy, that is, thermal energy, is converted into kinetic energy, so that the expanded gas may be cooled and the gaseous carbon dioxide included in the expanded gas may be frozen. Here, the gas expanded in the nozzle 415 may be gas in which the solid carbon dioxide and gaseous nitrogen/oxygen are mixed.

Meanwhile, as the gaseous carbon dioxide is frozen into the solid carbon dioxide, an exothermic reaction that dissipates heat to the surroundings may be accompanied, thereby dissipating heat inside the system. On the other hand, as a temperature of the gaseous nitrogen/oxygen continuously decreases through the expansion, the exothermic reaction and a thermal equilibrium may be achieved by the phase change of carbon dioxide.

Although not shown, the nozzle 415 may be divided into a reduced portion, a neck portion, and an enlarged portion. The reduced portion may be formed so that a flow cross-sectional area of the second compressed gas may be gradually decreased, and the enlarged portion may be formed so that the flow cross-sectional area of the second compressed gas may be gradually increased. The reduced portion and the enlarged portion may be connected by the neck portion, and an isentropic expansion performance of a fluid may be varied depending on an area ratio of the enlarged portion and the neck portion.

Meanwhile, according to the law of conservation of energy in the flow of the nozzle 415, potential energy, heat loss, and work do not occur under an adiabatic condition, and the internal energy, that is, a sum of the heat energy and the kinetic energy may always be constant. In an isolated system, the internal energy and the kinetic energy may be expressed as enthalpy, and the pressure and temperature may be extremely low through the nozzle 415 capable of expanding the fluid isentropically.

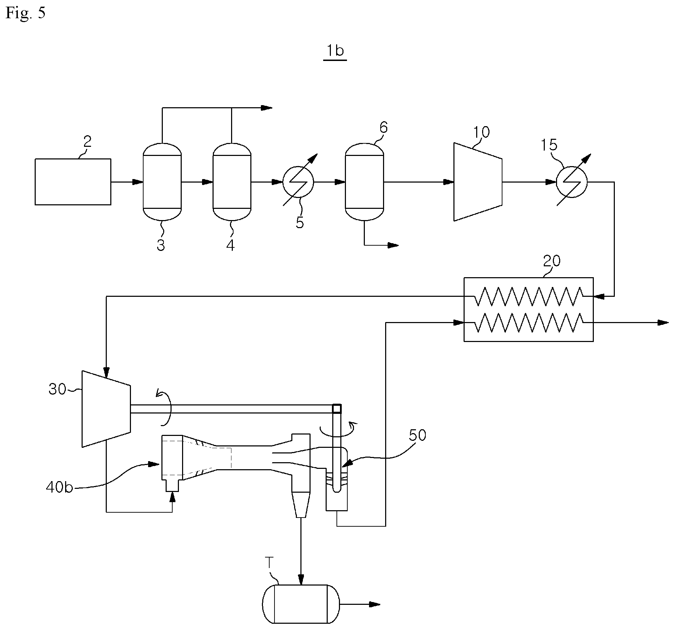

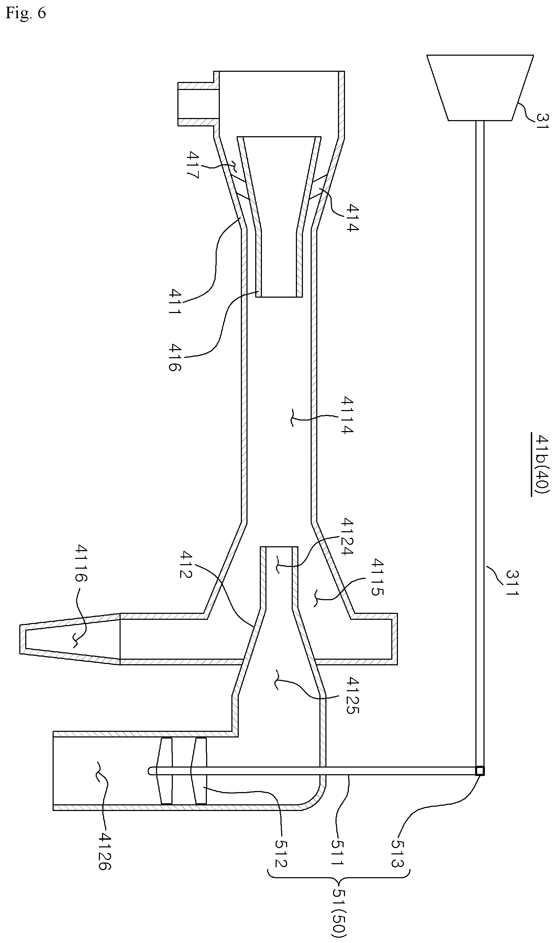

Referring to FIGS. 5 and 6, a carbon dioxide separation and capture system 1b according to still another embodiment of the present invention may include a first compression unit 10, a heat exchange unit 20, a second compression unit 30, a separation and capture unit 40b, and a power generation unit 50. However, since the carbon dioxide separation and capture system 1b shown in FIGS. 5 and 6 is substantially the same as the carbon dioxide separation and capture system 1 described with reference to FIGS. 1 and 2 except for the separation and capture unit 40b, the separation and capture unit 40b corresponding to a difference will be described below.

The separation and capture unit 40b may include a centrifugal dust collection unit 41b that converts flow of second compressed gas into supersonic flow and cools the second compressed gas, thereby inducing a phase change of gaseous carbon dioxide included in the second compressed gas into a solid state and separating therefrom.

The centrifugal dust collection unit 41b may include a main body 411, a vortex finder 412 connected to the main body 411 such that at least a part thereof is disposed inside the main body 411 and providing a path through which the remaining exhaust gas is discharged, and a flow guide member 416 disposed inside the main body 411. However, since the main body 411 and the vortex finder 412 are substantially the same as the main body 411 and the vortex finder 412 described with reference to FIGS. 1 and 2, the flow guide member 416 corresponding to a difference will be described below.

A flow path 417 may be formed between an outer wall of the flow guide member 416 and an inner wall of the main body 411. The second compressed gas may rotate and flow along the flow path 417.

In this case, the flow path 417 may be equipped with a swirler 414. Through the swirler 414, the second compressed gas may rotate along the flow path 417 while having a turning angle of about 15 degrees to about 65 degrees. The second compressed gas may be isentropically expanded after forming subsonic swirling flow while passing through the swirler 414, and may form supersonic swirling flow by passing after isentropically expanding before passing through the swirler 414.

The carbon dioxide of the second compressed gas reaches a sublimation point due to the rapidly decreasing temperature at a speed of at least Mach number 1 in the second compressed gas that converted into the isentropic flow by passing through a nozzle 415. Accordingly, the solid carbon dioxide and gaseous nitrogen/oxygen may be discharged through the subsonic swirling flow.

As such, the solid carbon dioxide and gaseous nitrogen/oxygen discharged through the swirling flow may swirl-flow along a middle flow path 4114 of the main body 411 toward a rear end of the main body 411. In addition, the solid carbon dioxide may be separated from the gaseous nitrogen/oxygen by an inertial collision in a rear end flow path 4115, and the separated solid carbon dioxide may be captured in a capturing part 4116 provided at a lower portion of the main body 411 by an influence of the gravity. In addition, the solid carbon dioxide captured in the capturing part 4116 may be transferred and stored at a separate tank T.

Meanwhile, the gaseous nitrogen/oxygen from which the solid carbon dioxide is separated, that is, remaining exhaust gas, may be boosted while passing through diffuser flow paths 4124, 4125 of the vortex finder 412, and then may be supplied to the power generation unit 50.

In this case, since the remaining exhaust gas supplied to the power generation unit 50 has a boosted state while passing through the diffuser flow paths 4124, 4125, flow energy of the remaining exhaust gas that passed through the diffuser flow paths 4124, 4125 may be maximized compared to before passing through the diffuser flow paths 4124, 4125. In addition, since the power generation unit 50 is supplied with the remaining exhaust gas having a state in which the flow energy is maximized, electric energy recovery therefrom may be maximized.

Thereafter, the remaining exhaust gas after the electric energy recovery from the maximized flow energy is completed may be discharged to a discharge flow path 4125. The remaining exhaust gas discharged to a discharge flow path 4126 may be supplied to the heat exchange unit 20.

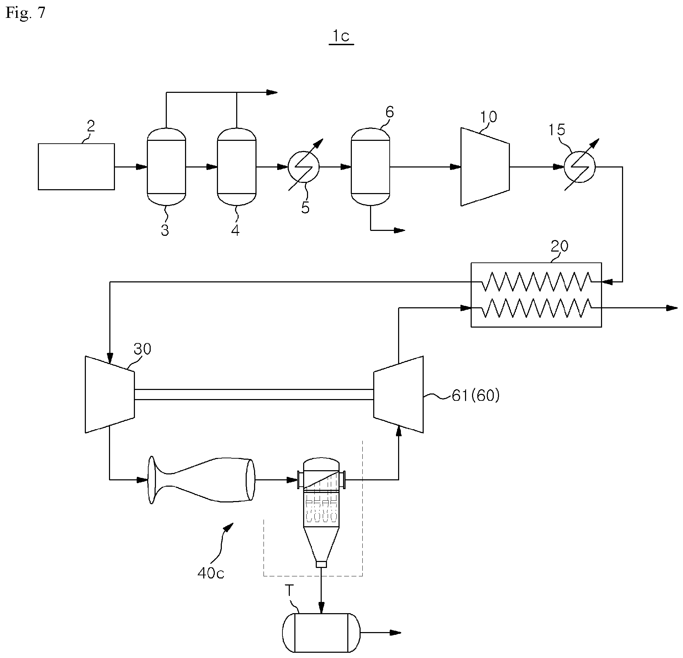

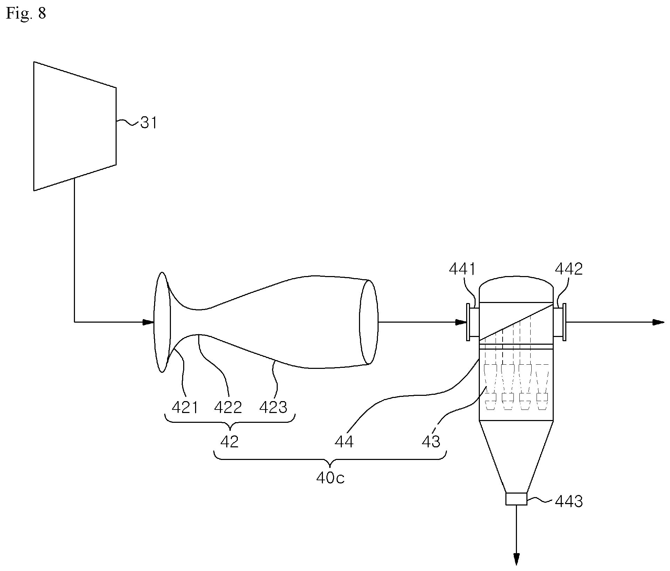

Referring to FIGS. 7 and 8, a carbon dioxide separation and capture system 1c according to still another embodiment of the present invention may include a first compression unit 10, a heat exchange unit 20, a second compression unit 30, a separation and capture unit 40c, and an expansion unit 60. However, since the carbon dioxide separation and capture system 1c shown in FIGS. 7 and 8 is substantially the same as the carbon dioxide separation and capture system 1 described with reference to FIGS. 1 and 2 except for the separation and capture unit 40c and the expansion unit 60, the separation and capture unit 40c and the expansion unit 60 corresponding to a difference will be described below.

The separation and capture unit 40c may include a nozzle part 42 supplied with second compressed gas from the second compression unit 30 and converting flow of the second compressed gas into supersonic flow, a plurality of centrifugal dust collection units 43 connected to the nozzle part 42, and an integrated module 44 accommodating the plurality of centrifugal dust collection units 43.

The nozzle part 42 may be divided into a reduced portion 421, a neck portion 422, and an enlarged portion 423. The reduced portion 421 may be formed so that a flow cross-sectional area of the second compressed gas may be gradually decreased, and the enlarged portion 423 may be formed so that the flow cross-sectional area of the second compressed gas may be gradually increased. The reduced portion 421 and the enlarged portion 423 may be connected by the neck portion 422, and an isentropic expansion efficiency of a fluid may be varied depending on an area ratio of the enlarged portion 423 and the neck portion 422.

The second compressed gas discharged from the second compression unit 30 may sequentially pass through the reduced portion 421, the neck portion 422, and the enlarged portion 423 of the nozzle part 42. The second compressed gas that passed through the enlarged portion 423 of the nozzle part 42 may flow into an inlet 441 of the integrated module 44.

The plurality of centrifugal dust collection units 43 may be disposed within the integrated module 44 to separate solid carbon dioxide from the second compressed gas that flows through the inlet 441 of the integrated module 44, for example, the second compressed gas isentropically expanded while passing through the nozzle part 42.

Meanwhile, the separated solid carbon dioxide may be captured in a capturing part 443 disposed at a lower portion of the integrated module 44 by an influence of the gravity. Remaining exhaust gas after the solid carbon dioxide is separated from the isentropically expanded second compressed gas may be discharged to a discharge port 442 of the integrated module 44 and may be supplied to an expander 61 of the expansion unit 60 described later.

The expansion unit 60 may be supplied with the remaining exhaust gas discharged through the discharge port 442 of the integrated module 44 to convert flow energy of the remaining exhaust gas into expansion energy.

To this end, the expansion unit 60 may include the expander 61 that expands and cools the remaining exhaust gas. The remaining exhaust gas expanded in the expander 61 may be supplied to the heat exchange unit 20. In this case, since the expander 61 is connected to the second compressor 31 of the second compression unit 30, energy consumed in a process operation may be reduced and efficiency may be increased.

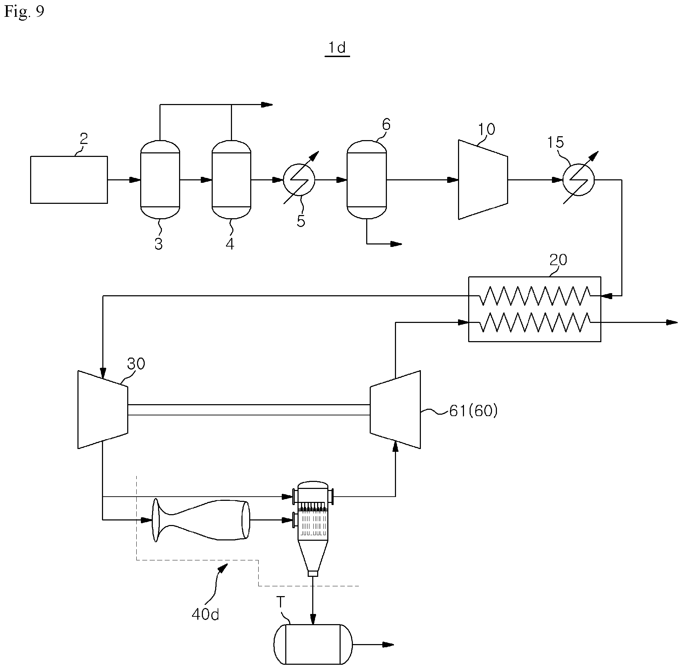

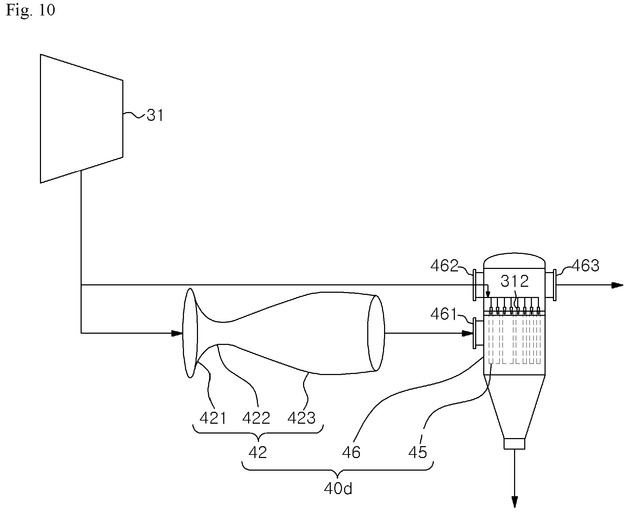

Referring to FIGS. 9 and 10, a carbon dioxide separation and capture system 1d according to yet another embodiment of the present invention may include a first compression unit 10, a heat exchange unit 20, a second compression unit 30, a separation and capture unit 40d, and an expansion unit 60. However, since the carbon dioxide separation and capture system 1d shown in FIGS. 9 and 10 is substantially the same as the carbon dioxide separation and capture system 1c described with reference to FIGS. 7 and 8 except for the separation and capture unit 40d, the separation and capture unit 40d corresponding to a difference will be described below.

The separation and capture unit 40d may include a nozzle part 42 supplied with a second compressed gas from the second compression unit 30 and converting flow of the second compressed gas into supersonic flow, a plurality of filtration dust collection parts 45 connected to the nozzle part 42, and an integrated module 46 that accommodates the plurality of filtration dust collection parts 45 and to which the remainder of second compressed gas discharged from the second compression unit 30 is supplied.

The nozzle part 42 may be divided into a reduced portion 421, a neck portion 422, and an enlarged portion 423. The reduced portion 421 may be formed so that a flow cross-sectional area of the second compressed gas may be gradually decreased, and the enlarged portion 423 may be formed so that the flow cross-sectional area of the second compressed gas may be gradually increased. The reduced portion 421 and the enlarged portion 423 may be connected by the neck portion 422, and an isentropic expansion efficiency of a fluid may be changed depending on an area ratio of the enlarged portion 423 and the neck portion 422.

The second compressed gas discharged from the second compression unit 30 may sequentially pass through the reduced portion 421, the neck portion 422, and the enlarged portion 423 of the nozzle part 42. At least a part of the second compressed gas that passed through the enlarged portion 423 of the nozzle part 42 may flow into a first inlet 461 of the integrated module 46. Solid carbon dioxide may be separated from the second compressed gas that flows into the first inlet 461 through the plurality of filtration dust collection parts 45 disposed in the integrated module 46. The solid carbon dioxide separated in this way may be captured by the gravity in a capturing part 464 provided at a lower portion of the integrated module 46. Furthermore, remaining exhaust gas after the solid carbon dioxide is separated from the isentropically expanded second compressed gas may be discharged to a discharge port 463 of the integrated module 46 and may be supplied to an expander 61 of the expansion unit 60 described later.

Meanwhile, the remainder of the second compressed gas that passed through the enlarged portion 423 of the nozzle part 42 may flow into a second inlet 462 of the integrated module 46. In other words, the second compressed gas may be supplied to the nozzle part 42 through a supply line and may also be supplied to the inside of the integrated module 46 through a branch line branched from the supply line. The second compressed gas supplied to the inside of the integrated module 46 may be used as backwash gas to remove carbon dioxide condensed on the plurality of filtration dust collection parts 45.

The branch line may be equipped with a supply valve (not shown) and a high-speed injection module 312. When the supply valve is opened, the second compressed gas flows along the branch line and may be supplied to the plurality of filtration dust collection parts 45 through the high-speed injection module 312. Accordingly, the solid carbon dioxide captured on a surface of the plurality of filtration dust collection parts 45 may be desorbed, and the desorbed solid carbon dioxide may be captured at a lower portion of the integrated module 46. Gaseous nitrogen/oxygen from which the solid carbon dioxide is separated in the plurality of filtration dust collection parts 45 may be supplied to the expander 61 of the expansion unit 60 described later.

The expansion unit 60 may be supplied with the remaining exhaust gas to convert flow energy of the remaining exhaust gas into expansion energy.

To this end, the expansion unit 60 may include the expander 61 that expands and cools the remaining exhaust gas. The remaining exhaust gas expanded in the expander 61 may be supplied to the heat exchange unit 20. In this case, since the expander 61 is connected to the second compressor 31 of the second compression unit 30, energy consumed in a process operation may be reduced and efficiency may be increased.

Although the embodiments of the present invention have been described as specific embodiments, it is merely an example, and the present invention is not limited thereto and it should be interpreted to have the broadest scope in accordance with the basic idea disclosed in this specification. Those skilled in the art may combine/substitute the disclosed embodiments to implement patterns of shapes not specified, but this also does not depart from the scope of the present invention. In addition, those skilled in the art may easily change or modify the disclosed embodiments based on this specification, and it is clear that such changes or modifications also fall within the scope of the present invention.

## Claims

1. A carbon dioxide separation and capture system, the system comprising:
a first compression unit supplied with exhaust gas and compressing the exhaust gas to generate first compressed gas;
a heat exchange unit connected to the first compression unit, supplied with the first compressed gas, and cooling the first compressed gas;
a second compression unit connected to the heat exchange unit and compressing the first compressed gas cooled in the heat exchange unit to generate second compressed gas; and
a separation and capture unit connected to the second compression unit and separating and capturing solid carbon dioxide from the second compressed gas by converting internal energy of the second compressed gas into kinetic energy and cooling the second compressed gas.

2. The system of claim 1, wherein the separation and capture unit includes a centrifugal dust collection unit that converts flow of the second compressed gas into supersonic flow to cool the second compressed gas, thereby inducing a phase change of gaseous carbon dioxide included in the second compressed gas into a solid state and separating therefrom.

3. The system of claim 2, wherein the centrifugal dust collection unit comprises:
a main body; and
a vortex finder connected to the main body such that at least a part of the vortex finder is disposed inside the main body and providing a path through which the second compressed gas is discharged,
wherein the second compressed gas rotates and flows along a flow path formed between an outer wall of the vortex finder disposed inside the main body and an inner wall of the main body.

4. The system of claim 3, wherein the centrifugal dust collection unit further comprises
a nozzle of which at least a part is disposed on the flow path and connected diagonally to an end of a supply line connected to the main body,
wherein the nozzle injects the second compressed gas diagonally, and the second compressed gas injected diagonally through the nozzle rotates and flows along the flow path.

5. The system of claim 2, wherein the centrifugal dust collection unit comprises:
a main body;
a vortex finder connected to the main body such that at least a part of the vortex finder is disposed inside the main body and providing a path through which the remaining exhaust gas is discharged; and
a flow guide member disposed inside the main body,
wherein the second compressed gas rotates and flows along a flow path formed between an outer wall of the flow guide member disposed inside the main body and an inner wall of the main body.

6. The system of any one of claims 3 to 5, wherein the flow path is equipped with a swirler,
wherein the swirler induces the second compressed gas to rotate along the flow path while having a turning angle in the flow path.

7. The system of any one of claims 3 to 5, wherein the system further comprises a power generation unit connected to the separation and capture unit and supplied with remaining exhaust gas after the solid carbon dioxide is separated from the second compressed gas, and converting flow energy of the remaining exhaust gas into electric energy.

8. The system of claim 7, wherein the second compression unit includes a second compressor that is axially connected to an impeller module of the power generation unit.

9. The system of claim 1, wherein the separation and capture unit comprises:
a nozzle part supplied with the second compressed gas from the second compression unit and converting flow of the second compressed gas into supersonic flow;
a plurality of centrifugal dust collection units connected to the nozzle part; and
an integrated module accommodating the plurality of centrifugal dust collection units.

10. The system of claim 1, wherein the separation and capture unit comprises:
a nozzle part supplied with at least a part of the second compressed gas from the second compression unit and converting flow of the second compressed gas into supersonic flow;
a plurality of filtration dust collection parts connected to the nozzle part; and
an integrated module accommodating the plurality of filtration dust collection parts and supplied with a remainder of the second compressed gas discharged from the second compression unit.

11. The system of claim 9 or claim 10, the system further comprising an expansion unit connected to the separation and capture unit, supplied with a remaining exhaust gas after the solid carbon dioxide is separated from the second compressed gas, and converting flow energy of the remaining exhaust gas into expansion energy.

12. The system of claim 11, wherein the expansion unit includes an expander that expands and cools the remaining exhaust gas, and the remaining exhaust gas expanded from the expander is supplied to the heat exchange unit.

13. The system of claim 12, wherein the second compression unit includes a second compressor that is axially connected to the expander.
